# EUROPEAN PATENT APPLICATION

(11) **EP 4 751 573 A1**
(43) Date of publication of application: **03.06.2026**
(21) Application number: 25219285.1
(22) Date of filing: 28.11.2025
(51) Int. Cl.: A23B 2/00, F24F 6/00, F24F 11/00, F25D 13/00, F24F 6/12, F24F 6/14, F24F 110/20

(54) **HUMIDIFYING SYSTEM AND METHOD OF OPERATING IT**

(30) Priority: 29.11.2024 IT 202400027075
(71) Applicant: Evco S.P.A., 32036 Sedico (BL) (IT)
(72) Inventor: MINOZZI, Fabrizio, 32036 SEDICO (BL) (IT); BALBINOT, Marco, 32036 SEDICO (BL) (IT)
(74) Representative: Studio Torta S.p.A.

(57) **Abstract**

A humidifying system comprises an atomiser system, and a water pressuriser assembly, which supplies pressurised water at a predetermined atomisation pressure to the atomiser system and comprises a mechanical actuator stage and a water pressuriser stage. The mechanical actuator stage comprises a first chamber that receives a working fluid and a first piston that is axially moved in the first chamber under the thrust of the working fluid, and a water pressuriser stage that comprises a second chamber that receives water and a second piston that moves in the second chamber under the mechanical thrust generated by the first piston, thereby supplying the atomiser system with water having a predetermined nebulisation pressure.

## Description

### CROSS-REFERENCE TO RELATED PATENT APPLICATIONS

This application claims priority of the Application for Italian Patent No. 102024000027075 filed on November 29, 2024, the contents of which are incorporated herein by reference.

### TECHNICAL FIELD

The present invention relates to a system humidifier and the corresponding method of operation.

It is known in certain technical sectors, such as the food sector, that there is a need to carry out an air humidification process in an environment during the implementation of an "adiabatic" air cooling process/cycle, that is, without any energy/heat exchange.

Generally, the environments to be humidified are essentially enclosed and, in the case of the food sector, may, for example, consist of cells for the storage of foodstuffs. In such environments, it is in fact necessary to ensure the maintenance of predetermined humidity and temperature conditions, that is, conditions appropriate for the proper preservation of foodstuffs.

To this end, humidifying systems have been devised that are configured in order to spray in a controlled manner a certain quantity of water appropriately nebulised into the air present and/or introduced into the environment to be humidified.

Generally, the above-mentioned adiabatic humidification systems include an atomizing system provided with nebulising nozzles arranged in the environment receiving the humidified air, and a water pressurising hydraulic unit, which is connected to the ducts of the nebulisation system to supply pressurised water to the nebulising nozzles in order to spray micro-droplets into the air.

The hydraulic units used in currently known humidifier systems are essentially distinguished into at least two different categories depending on the use or non-use of water pressurisation pumps.

In this instance, a first type of hydraulic units foresees the use of piston pumps or vane pumps. This first type foresees the use of electric motors provided with an output shaft mechanically connected to the pistons or to the vanes to drive them. The adiabatic humidification systems belonging to the first type have the technical problem of being subject to significant electrical consumption. The use of electric motors indeed has a non-negligible impact on the overall energy consumption of the system.

A second type of hydraulic groups, distinct from the first type, instead involves the use of systems which are alternatives to the hydraulic pumps described above. These systems are manifold and include, for example: systems for spraying water mixed with compressed air, ultrasonic spraying systems comprising agitator devices equipped with piezoceramic discs operating at high frequency, systems with humidifying panels or packaged humidifiers through which a stream of air passes that draws an absorbable amount of water/humidity, and centrifugal mechanical systems that include a rotating disc shaped in in order to break the cohesion of water to transform it into microdroplets to be expelled into the environment.

Systems of the second type are subject to frequent maintenance and, in its absence, to possible breakages, which on one hand affect the operating costs of the system and on the other expose it to frequent downtimes that, in some applications-such as those related to the food sector-can create both issues regarding proper preservation and logistical/managerial problems when, for example, the intervention timings are incompatible with the timings required for storage at a predetermined humidity.

Furthermore, some systems belonging to the two types described above are not suitable for atomizing water to achieve particularly reduced dimensions, that is, below certain minimum sizes, as they are heavily structurally constrained to operate with specific water flow rates and therefore limited pressures. Additionally, some of these solutions exhibit an hourly misting capacity below a predetermined threshold. In this case, some of these solutions are unable to exceed an hourly misting threshold of 20l/h, except at high cost. Such limitations render these systems of low versatility and unsuitable for use in applications that require a significant level of water atomization, in which the droplet sizes are particularly reduced.

### DESCRIPTION OF THE INVENTION

The purpose and object of the present invention is therefore to provide a humidification system that overcomes at least the technical issues listed above.

This object is achieved by the present invention as it relates to a humidifying system, made in accordance with the definitions set forth in the corresponding independent system claim and preferably, but not necessarily, in any of the claims dependent thereon.

This object is further achieved by the present invention insofar as it relates to an operating method for a humidification system, implemented in accordance with the provisions set forth in the corresponding independent method claim and, preferably but not necessarily, in any one of the dependent claims thereof.

Independent and dependent claims describe preferred embodiments of the present invention and form an integral part of this description.

### BRIEF DESCRIPTION OF THE DRAWINGS

The present invention is now described with reference to the attached drawings, which illustrate a non-limiting example of implementation, in which:
- Figure 1 schematically illustrates a humidifier system constructed in accordance with the principles of the present invention,
- Figure 2 is a perspective view of an embodiment of a water pressuriser group of the humidifier system shown in Figure 1
- Figure 3 shows a vertical section of the water pressurising unit shown in Figure 2,
- Figures 4, 5 and 6 show vertical sections of the water pressuriser group shown in Figure 3 in their respective operational phases of water pressurisation,
- Figure 7 schematically illustrates a humidification system realised according to an embodiment variant of the present invention.

### DESCRIPTION OF EMBODIMENTS

The present invention shall now be described in detail with reference to the attached figures to enable a person skilled in the art to make and use it. Various modifications to the described embodiments will be immediately apparent to those skilled in the art and the general principles described may be applied to other embodiments and applications without thereby departing from the protective scope of the present invention, as defined in the appended claims. Accordingly, the present invention should not be construed as limited to the embodiments specifically disclosed and illustrated, but should be accorded the broadest possible protective scope in accordance with the principles and features herein described and claimed.

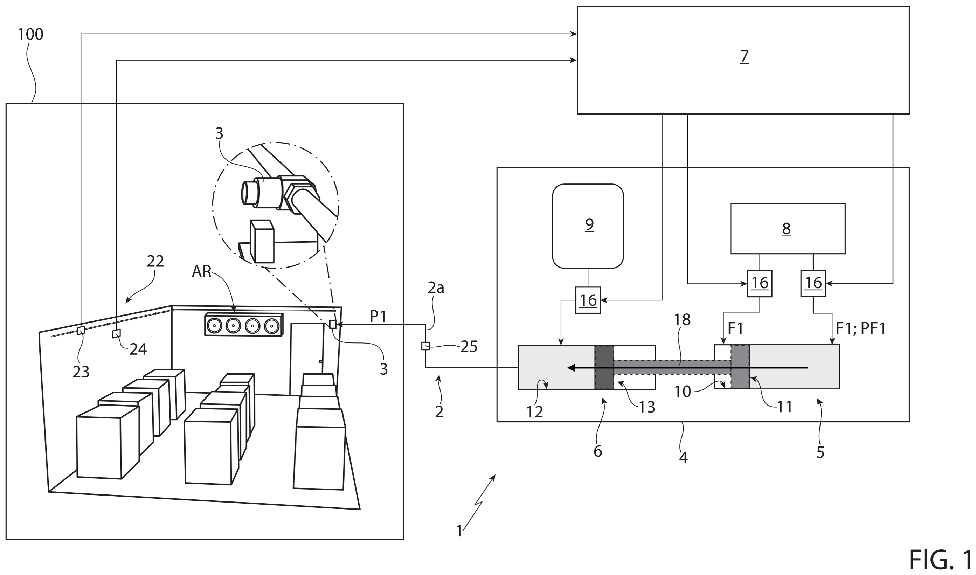

With reference to Figure 1, the number 1 schematically indicates, in its entirety, a humidifying system which is configured in order to spray nebulized water into at least one chamber 100.

According to a preferred embodiment of the present invention, the humidifying system 1 is conveniently an adiabatic humidification system. In the following discussion, by the term "adiabatic humidifying system" is meant a system that is configured to regulate the humidity of the air to be treated by spraying it with nebulised water in the manner described in detail below, preferably but not necessarily, during a simultaneous implementation of an adiabatic type cooling or treatment process for the same air to be treated. The cooling process may be carried out by means of a cooling device/apparatus AR present in the humidification system 1. The cooling device/apparatus AR may include, for example, an air conditioner or a similar apparatus.

As shown in Figure 1, chamber 100 can be a substantially closed chamber. Chamber 100 may comprise, for example, a humidification and cooling cell, preferably adiabatic. The cell may be, for example, a cell for the storage and refrigeration of food.

It is, however, to be understood that the present invention is not limited to a chamber 100 corresponding to a food humidification and cooling cell of the type mentioned above, but in addition or, alternatively, may provide for other types of cells and/or cell/compartment applications in other technical fields or air handling units (AHU).

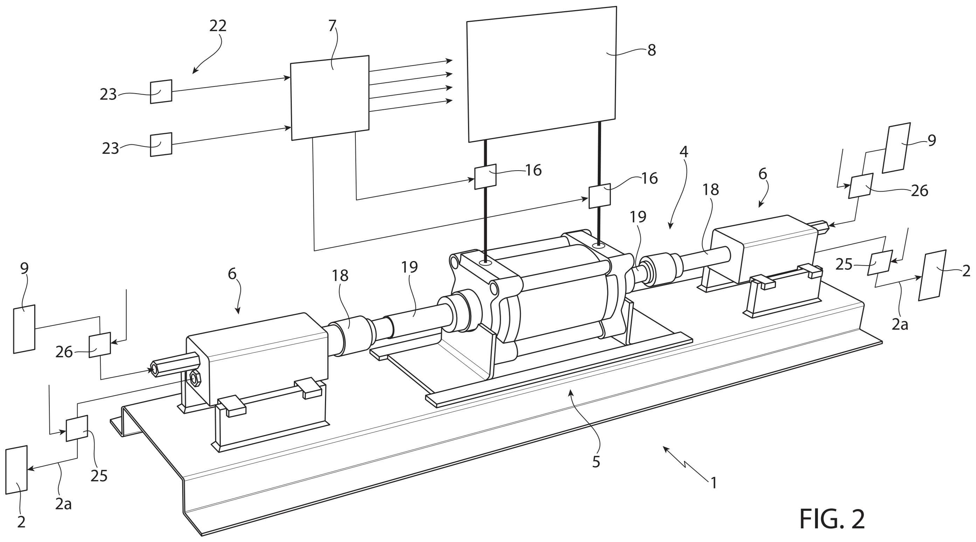

According to a preferred embodiment illustrated in Figures 1 and 2, the humidification system 1 comprises one or more atomizing systems 2 (only one of which is shown in Figure 1). An atomizing system 2 is provided with one or more nebulizer nozzles 3. An atomizing system 2 comprises one or more hydraulic distribution branches or water hydraulic conduits 2a that extend into the chamber 100.

The atomizing nozzles 3 are hydraulically connected to the ducts 2a to receive water at an atomization pressure P1 so as to spray it in order to atomize it into microdroplets. The microdroplets may have a diameter on the order of a few µm so that they can be absorbed by a surrounding volume of air. The droplets may have dimensions ranging from approximately 1 µm to approximately 20 µm.

The nebulization pressure P1 is a high pressure (elevated pressure). The nebulization pressure P1 (high) can preferably be between approximately 25 bar and approximately 100 bar. More preferably, the nebulization pressure P1 can be approximately 40-80 bar.

According to a preferred embodiment shown in Figures 1 and 2, the humidifier system 1 further comprises at least one water pressurizing group 4, which is configured to supply water having the nebulisation pressure P1 to one or more atomising units 2 so as to spray it in an atomized, that is, nebulised, manner into the corresponding chambers 100 through the atomising nozzles 3.

According to the present invention, the water pressuriser group 4 further comprises one or more mechanical displacement generator stages 5 and one or more water pressurisation stages 6. Conveniently, as shown in the attached Figures 2-6, the one or more mechanical displacement actuator stage(s) 5 and the one or more water pressurisation stage(s) 6 may be provided with corresponding support frames fixedly secured to a support surface.

According to the present invention, the humidification system 1 further comprises one or more fluid supply units 8 (one of which is shown in Figures 1-3), which are hydraulically connected to one or more mechanical displacement actuator stages 5 through one or more input/output ports to selectively supply them with a working fluid F1 having a working pressure PF1. The working pressure PF1 is an average pressure. The working pressure PF1 is lower than the nebulising pressure P1. The working pressure PF1 can conveniently be between approximately 2 bar and approximately 15 bar. Moreover, preferably the working pressure PF1 can be about 5-10 bar.

The working fluid F1 may comprise a substance in either a liquid state or a gaseous state. The working fluid F1 may optionally comprise: air, water, oil, or similar substances. If the working fluid F1 comprises air, it is supplied compressed to a pressure corresponding to the working pressure PF1.

According to the present invention, the humidification system 1 further comprises one or more water supply groups 9 (only one of which is shown in Figures 1-3), which are hydraulically connected to the water pressurising stages 6 via one or more inlet/outlet ports for supplying them with water. Conveniently, the water may comprise treated water. Treated water may, as an option, comprise: filtered water, or drinking water, or softened water, or demineralised water, or the like.

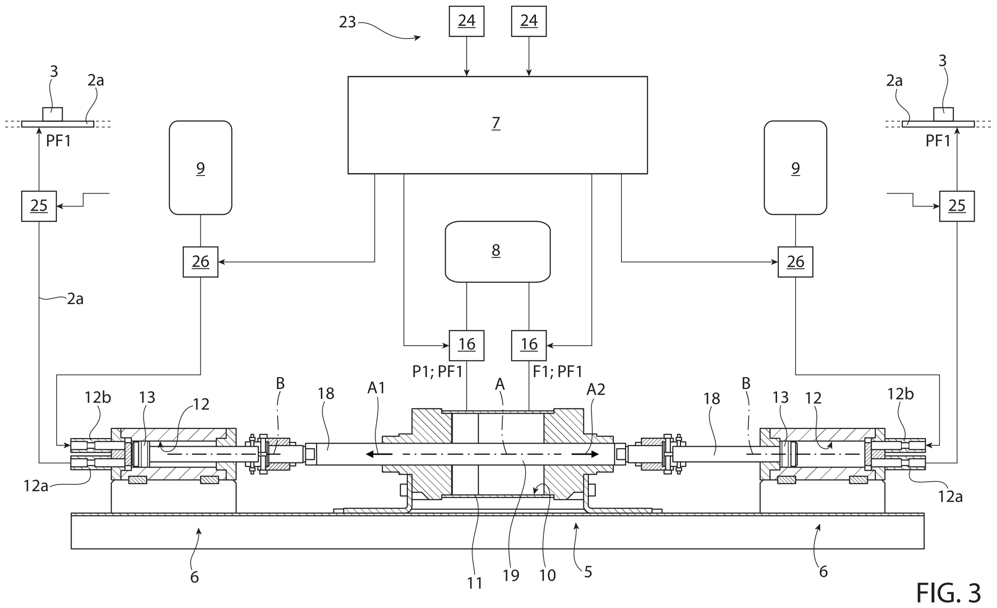

In the following discussion, in order to improve/increase the clarity and understanding of the present invention, reference shall be made, without thereby losing generality, to a pressurising group 4 which is provided with a mechanical actuator stage 5 and two water pressurising stages 6 (Figures 2 and 3) .

It is nevertheless understood that the present invention is not limited to the configuration shown in Figures 2,3, in which the pressurising group 4 comprises a mechanical actuator stage 5 and two water pressurising stages 6, but may include any number and various combinations of mechanical displacement actuator stages 5 and water pressurising stages 4.

It is further appropriate to note that the number of mechanical displacement actuator stages 5 and/or the number of water pressuriser stages 6 may vary on the basis of various technical parameters associated with the humidification function of the air to be treated. For example, the technical parameters may be indicative of the characteristics of the atomiser system 2, such as the number of nebuliser nozzles 3, and/or the nebulising pressure P1, and/or the number of chambers 100.

With reference to Figures 2 and 3, the mechanical actuator stage 5 comprises a chamber 10, which extends along an axis A, and a piston 11 arranged for axial sliding movement within the chamber 10 to move along the axis A in a direction A1 and, alternately, in a direction A2 having an opposite sense to that of direction A1. The chamber 10 may comprise a cylinder that is hydraulically connected to a fluid supply unit 8 via at least two conduits to selectively receive, in one or the other conduit, the working fluid F1 at the operating pressure PF1. Respective solenoid valves 16 may be provided on the conduits, configured to open/close the corresponding conduit on command.

The piston 11 is arranged in the chamber 10 so as to be axially displaced in the direction A1 or alternatively in the direction A2 by the thrust exerted by the working fluid F1. The displacement in the directions A1 and A2 of the piston 11 within the chamber 10 can be selectively controlled by an electronic control system 7 that drives the solenoid valves 16. The alternating opening/closing of the solenoid valves 16 causes the alternating displacement of the piston 11 in the direction A1 or, conversely, in the opposite direction A2.

According to the present invention, the water pressuriser stages 6 each comprise a chamber 12 that extends along an axis B and a piston 13 arranged in the chamber 12 for axially slidable movement along the axis B between a first axial position and a second axial position, and vice versa. The chamber 12 may comprise a cylinder hydraulically connected via hydraulic conduits to a water supply unit 9 to receive water.

In the illustrated example, when piston 13 moves from the first to the second axial position (piston 13 on the left in Figure 3), the internal volume of chamber 12 is reduced from a maximum value to a minimum value, the water present in chamber 12 being compressed, that is, pressurised, so that its pressure in chamber 12 reaches the spray pressure PF1, and is then supplied to the atomiser unit 2 via a supply line 12a.

Conversely, when piston 13 moves from the second to the first axial position (piston 13 on the right in Figure 3), the internal volume in chamber 12 increases from the minimum value to the maximum value. In this condition, water can be conveniently supplied, that is, loaded from the water feeding unit 9 into chamber 12 through a conduit 12b.

According to the present invention, the pistons 13 are mechanically coupled to the piston 11 so that the axial movement of the piston 11 along the axis A causes the axial displacement of the pistons 13 in the respective chambers 12 to pressurise the water contained therein and supply it to the atomising system 2.

According to the embodiment shown in Figures 2 and 3, the pistons 13 are mechanically coupled to the piston 11 in such a way that the axial movement of piston 11 in the A1 direction causes the axial movement of the pistons 13 alternately between the first and second axial positions, and vice versa. Conveniently, piston 11 is mechanically connected to both pistons 13 so that when piston 11 moves within chamber 12 in direction A1: it moves a first piston 13 of the two pistons 13 from the first to the second axial position in order to supply water at nebulising pressure P1 to the atomiser system 2 (piston 13 shown on the left in Figure 3), and simultaneously moves a second piston 13 of the two pistons 13 from the second to the first position in order to allow the water feed unit 9 to load water into chamber 12 of the second piston 13.

Furthermore, piston 11 is mechanically connected to pistons 13 in such a way that when piston 11 moves within chamber 12 in the A2 direction: it shifts the second piston 13 of the two pistons 13 from the first to the second axial position in order to supply water at PF1 spray pressure to the atomiser unit 2, while simultaneously shifting the first piston 13 of the two pistons 13 from the second to the first position to allow the water feeding unit 9 to load water into chamber 12 of the first piston 13.

According to an embodiment shown in Figures 2 and 3, the piston 11 and its corresponding cylinder of chamber 12 may have a double-stage mechanical configuration, i.e. dual effect. Alternatively, according to one possible embodiment, the piston 11 and the cylinder of chamber 12 may have a single-stage mechanical configuration, i.e. single effect (Figure 1) .

According to an embodiment shown in Figures 2 and 3, the mechanical actuator stage 5 comprises transmission rods or bars 18 to the pistons 13 of the motion generated by piston 11. The bars 18 mechanically couple piston 11 to the pistons 13 of the water pressurising stages 6.

According to one embodiment, the piston 11 may be provided with a plunger mounted telescopically in the chamber 10 and at least one rod 19 extending along the axis B. The rod 19 features at least one portion arranged within the chamber 12 that is connected to the plunger and at least one end positioned outside the chamber 12 and connected to a corresponding piston 13.

The rod or bar 18 extends coaxially along axis A, is mounted for axial movement in the corresponding cylinder and has one axial end coupled to the stem 19 of the first piston 13 and the opposite axial end mechanically coupled to the s piston 13.

According to a simplified exemplary embodiment shown in Figure 3, the two opposite axial ends of the bar 18 are rigidly connected, one to the end of a rod 19 of the first piston 13, and the other to the end of the rod of the piston 11.

According to an exemplary embodiment, the mechanical actuator stage 5 and the water pressurizer stages 6 are arranged relative to one another in such a way that the axis A for displacement of the piston 11 is coaxial with the axes B for displacement of the first and second piston 13.

According to an exemplary embodiment, the humidifying system 1 comprises electrovalves 25 arranged along the conduits 2a and electrovalves 26 arranged along the conduits that connect the water supply group 9 to the chambers 12.

The humidifying system 1 is conveniently provided with a sensor system 22 comprising humidity sensors 23. Conveniently, the sensor system 22 may also include temperature sensors 24. According to one possible embodiment, the humidity sensors 23 are preferably arranged in the chamber 100 and are configured to provide data/signals indicative of the air humidity. According to one possible embodiment, the temperature sensors 24 are preferably arranged in chamber 100 and are configured to provide data/signals indicative of the air temperature.

The electronic system 7 is configured in order to control the mechanical actuator stage 5 based on parameters indicating the air humidity in the chamber 100.

Preferably, electronic system 7 can be configured in order to control the mechanical actuator stage 5 based on parameters indicative of air humidity and air temperature in chamber 100.

According to one possible embodiment, when the electronic system 7 is configured in order to activate the displacement of piston 11 of the mechanical actuator stage 5 so as to supply water at the nebulisation pressure P1 to the atomiser system 2, it determines that the humidity measured by sensor 23 does not meet a predetermined humidity condition, for example, when it determines that the humidity measured by sensor 23 is below a predetermined threshold.

According to one possible embodiment, when electronic system 7 detects that the humidity measured by humidity sensor 23 meets a predetermined humidity condition, for example, when it detects that the humidity measured by humidity sensor 23 reaches a predetermined humidity threshold, electronic system 7 commands the interruption of the movement of piston 11 of the mechanical actuator stage so as not to supply water at pressure P1 to the atomiser 2.

According to one possible embodiment, the electronic system 7 can be configured in order to regulate/modify the axial (alternating) displacement speed of the piston 11 based on at least the indicative parameter of the air humidity in the chamber 100.

According to one possible embodiment, the electronic system 7 may be configured in order to regulate/modify the axial (reciprocating) movement speed of piston 11 based on the indicative parameter of humidity and the air temperature in chamber 100.

According to one possible embodiment, the electronic system 7 can be configured in order to regulate/change the frequency of the alternating axial movement of piston 11 in the directions A1 and A2 on the basis of indicative parameters of the air humidity in chamber 100. Preferably, the frequency of the alternating axial movement of piston 11 in the directions A1 and A2 can be configured in order to regulate/change the frequency of the alternating axial movement of piston 11 in the directions A1 and A2 on the basis of indicative parameters of the air humidity and air temperature in chamber 100.

For example, when the electronic system 7 determines that the humidity measured by the humidity sensor 23 does not meet a pre-established humidity condition, for instance being below a pre-established humidity threshold, the electronic system 7 commands the fluid feed group 8 via the solenoid valves 26 to increase the axial displacement frequency of piston 11 of the mechanical actuator group 5 in order to increase the water spray frequency through the nozzles 3. An increase in the axial displacement frequency of piston 11 results in an increase in humidification, that is, in the air humidity.

Conversely, when the electronic system 7 determines that the humidity measured by the humidity sensor 23 meets the predetermined humidity condition, for example, it is equal to or greater than the predetermined humidity threshold, the electronic system 7 commands the fluid supply unit 8 via the solenoid valves 26 to interrupt the axial movement of the piston 11 of the mechanical actuator group 5 in order to stop the water spraying. Conveniently, the electronic system 7 can command the opening of the solenoid valves 26 to discharge any residual water present in the pipes and distribution nozzles, thus preventing the formation of bacterial colonies for sanitary purposes. An increase in the frequency of the axial movement of the piston 11 results in enhanced humidification, that is, an increase in the amount of humidity in the treated air.

Conversely, a reduction in the frequency of axial displacement of piston 11 results in a reduction in humidification, namely the humidity of the air to be treated. It is understood that the present invention is not limited to a pressurisation assembly of the type described above in which two water pressuriser stages are provided arranged in opposed bands relative to the central mechanical actuator stage, but could involve alternative configurations. According to one possible embodiment, the pressurisation assembly may comprise a single pressurisation stage positioned alongside the central mechanical actuator stage. According to another embodiment, the pressurisation assembly may comprise a series of pressurisation stages (a number greater than two). Moreover, the arrangement of the pressurisation stages relative to the central mechanical actuator stage could also differ from that described above. For example, the pressurisation stages might not be arranged in opposition relative to the central mechanical actuator stage but could be positioned laterally thereto. Additionally, the number of pistons for each pressurisation stage could be greater than one.

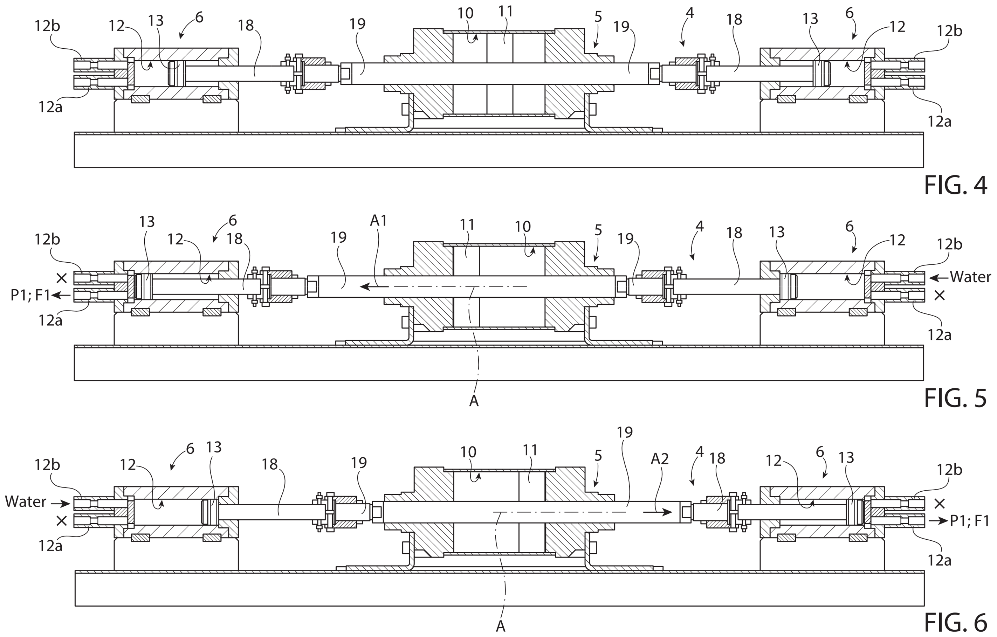

With reference to Figures 4, 5 and 6, the operation of the humidifier system 1 will be explained below, in which it is assumed in Figure 4 that piston 11 is in an intermediate position in chamber 10, and that water is at least partially present in the chambers 12 of the water pressurising stages 6.

With reference to Figures 4 and 5, when bar 18 is moved by piston 11 in direction A1, both pistons 13 are moved in the same direction A1. In this condition, the first piston 13 compresses the water in its own chamber 12 and delivers it through delivery line 12a at a spray pressure P1 to the atomising system 2, while the second piston 13 increases the volume in chamber 12 to allow the water to be loaded by the water feeding unit 9.

With reference to Figures 5 and 6, when bar 18 is moved by piston 11 in direction A2, both pistons 13 are moved in the same direction A2. In this condition, the second piston 13 compresses the water in its own chamber 12 and supplies it through delivery 12a with an atomisation pressure P1 to the corresponding atomiser unit 2, and the first piston 13 increases the volume in chamber 12 to allow the water to be loaded.

The advantages of the above-described humidifier system are as follows.

The humidification system significantly reduces electrical consumption. Thanks to its multi-stage structure, the humidification system is easily adaptable to the different levels of humidification required in the rooms. The atomisation pressure achieved is sufficiently high to ensure a reduction in the size of the atomized droplet, even at low flows. This solves the technical problem generally present in some systems which, when operating at low flows and being unable to reach high atomisation pressures, provide a water atomisation that is not entirely suitable for properly carrying out humidification due to the significant size of the water droplets delivered into the environment. Moreover, the multi-stage structure of the humidification system is not exposed to maintenance operations that involve replacing the lubricating oil, as is the case with some known systems.

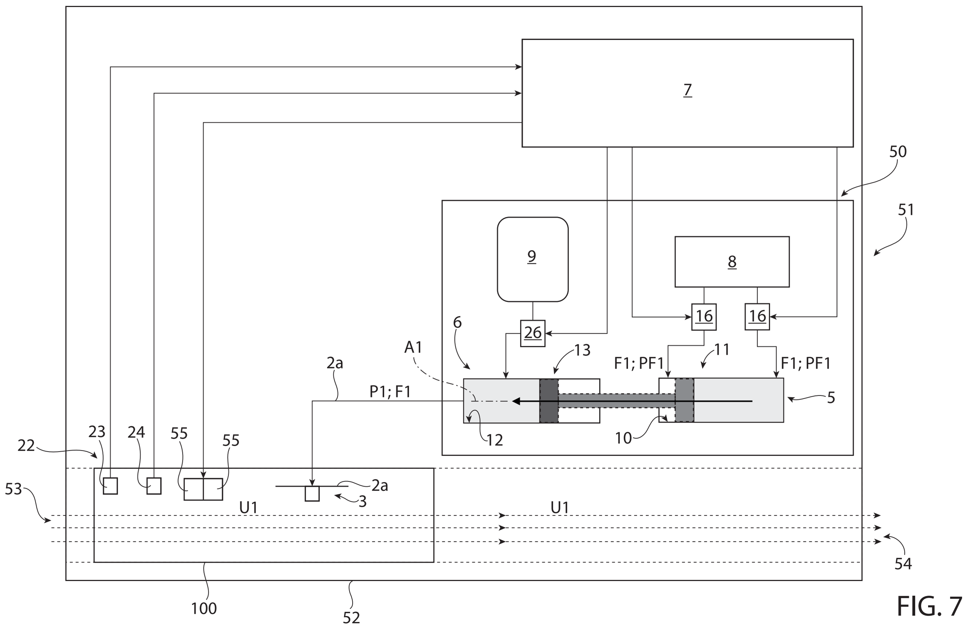

Figure 7 illustrates a humidification system 50 that is similar to the humidification system 1 shown in Figures 1 to 6, and whose component parts will be designated, where possible, with the same reference numbers that designate corresponding parts of the humidification system 1.

The humidifier system 50 differs from the humidifier system 1 in that it is used in a chamber 100 which is included in and/or forms a part of and/or is integrated into an apparatus or unit 51 configured to treat air U1 that is supplied to an environment/room. The air treatment unit 50 may be, for example, an air cooling/conditioning unit of the "UTA", "AHU", "HVAC" type or similar. The air treatment unit 51 may comprise a box-like frame 52 containing at least one chamber 100 which, in operation, receives at an inlet 53 the air U1 to be treated and provides the treated, humidified air U1 at an outlet 54. The air treatment unit 50 may comprise a series of air treatment devices/apparatus 55 that are configured in order to implement at least one or more of the following functions: air conditioning and/or climate control and/or cooling and/or heating of the air.

The adiabatic humidification system is extremely versatile as it can be easily installed both in air handling units (UTA/AHU) and in an environmental space, ensuring proper operation without compromising safety.

## Claims

1. Humidifying system (1) configured to spray atomized water in at least one chamber (100) to control the humidity of the air in said chamber (100),
wherein the humidification system (1) comprises:
an atomizing system (2) provided with one or more nebulising nozzles (3),
and a water pressurizer unit (4), which is configured in order to supply water at a predetermined nebulization pressure (P1) to the atomizing unit (2),
the water pressurizer group (4) comprises at least one mechanical actuator stage (4) and at least one water pressurizing stage (6),
the mechanical actuator stage (4) comprises:
at least one first chamber (10) configured in order to receive a first fluid at an inlet with a working pressure (PF1) lower than the aforementioned nebulization pressure (P1),
at least a first piston (11) that is configured to axially move in the first chamber (10) when it is pushed by the first fluid (F1),
the water pressurizer stage comprises
at least a second chamber that is configured in order to receive water,
at least one second piston (13) which is mechanically coupled to the first piston (11) in order to be axially displaced by the latter in the second chamber (12) thereby compressing the water inside the second chamber (12) to supply water having the predetermined atomization pressure (P1) to the atomization system (2).

2. Humidifying system according to claim 1, comprising an electronic control system (7) that is configured in order to control the movement of the first piston (11) of the said mechanical actuator stage (4) in order to regulate the air humidity.

3. Humidifying system according to claim 2, wherein the electronic control system (7) is configured in order to control the movement of the first piston (11) of the said mechanical actuator stage (4) on the basis of parameters indicative of the air humidity in the said chamber (100).

4. Humidifying system according to any of the preceding claims, comprising a sensor system (22) configured in order to provide the said electronic control system (7) with data/signals indicative of the humidity and/or temperature of the air within the said chamber (100).

5. Humidifying system according to claim 4, wherein the electronic control system (7) is configured in order to control the axial displacement of said first piston (11) on the basis of said parameters indicative of the humidity and/or temperature of the air in said chamber (100).

6. Humidifying system according to any one of the preceding claims, comprising two water pressurizer stages (6) provided with respective secondary pistons (13) which are mechanically connected to said first piston (11) in order to be both axially moved by the latter in the respective chambers (12).

7. Humidifying system according to claim 6, wherein the second pistons (13) are configured to perform a reciprocating movement in the respective chambers (12).

8. Humidifying system according to any one of the preceding claims, comprising a fluid supply unit (9) that is hydraulically connected to the mechanical actuator stage (5) for providing said working fluid at the said working pressure (PF1) through at least one hydraulic duct and valve means (16) arranged in said at least hydraulic duct, said electronic control system (7) being configured in order to control the valve means (16) to cause said first piston (11) to move in a first direction (A1) or in a second direction (A2) opposite to the first direction (A1).

9. Humidifying system according to any one of the preceding claims, wherein the first piston (11) is connected to at least one second piston (13) through a bar (18).

10. Humidifying system according to any preceding claim, in which said camber (100) is arranged in a cooling cell or in an air handling unit.

11. Method of operation of a humidifying system (1) configured in order to provide atomized water in a chamber (100) to humidify the air in the same chamber (100), wherein the humidifying system (1) comprises:
an atomizing system (2) provided with one or more nebulising nozzles (3),
and a water pressurizing unit (4), which is configured in order to supply water having a predetermined nebulisation pressure (P1) to the atomizing system (2),
the water pressurising group (4) comprises at least one mechanical actuator stage (4) and at least one water pressurising stage (6),
the mechanical actuator stage (4) comprises at least a first chamber (10) and a first piston (11) that is axially movable in the first chamber (10),
the water pressuriser stage (6) comprises at least a second chamber (12) that is configured in order to receive water and a second piston (13) that is arranged in order to move within the second chamber (12) and is mechanically connected to the first piston (11),
the method comprises the step of feeding a working fluid (F1) into the first chamber having a working pressure (PF1) lower than the nebulization pressure (P1) in order to axially move the first piston (11) in the first chamber (10) thereby moving the second piston (13) into the second chamber (12).

12. Use of a humidifying system (50) in an air treatment unit (51) in which the humidifying system (50) is made according to any of claims from 1 to 10.
